# EUROPÄISCHE PATENTSCHRIFT

(11) **EP 0 374 580 B1**
(45) Veröffentlichungstag und Bekanntmachung des Hinweises auf die Patenterteilung: **01.09.1993**
(21) Anmeldenummer: 89122416.4
(22) Anmeldetag: 05.12.1989
(51) Int. Cl.: B21D 39/06, B21D 53/88, B21D 53/84, B21D 39/20

(54) **Gebaute Welle**
Assembled shaft
Arbre composé

(30) Priorität: 17.12.1988 DE 3842592
(43) Veröffentlichungstag der Anmeldung: 27.06.1990
(73) Patentinhaber: Emitec Gesellschaft für Emissionstechnologie mbH, 53797 Lohmar (DE)
(72) Erfinder: Swars, Helmut, D-5060 Bergisch Gladbach 1 (DE)
(74) Vertreter: Kahlhöfer, Hermann, Dipl.-Phys.

(56) Entgegenhaltungen:
- EP-A- 0 230 731
- EP-A- 0 328 009
- DE-A- 3 726 083
- PATENT ABSTRACTS OF JAPAN, Band 10, Nr. 331 (M-533)[2387], 11. November 1986;& JP-A-61 135 434 (NISSAN MOTOR) 23-06-1986

## Beschreibung

Die Erfindung betrifft eine gebaute Welle, bestehend aus einer aus einzelnen Rohrkörpern zusammengesetzten Hohlwelle und darauf befestigten Antriebselementen wie Nocken oder Zahnradern und/oder darauf befestigten Lagerhülsen.

Die Erfindung betrifft weiterhin ein Verfahren zum Herstellen einer gebauten Welle, insbesondere einer kurbelwelle, Getriebe- oder Nockenwelle bei der Hülsenelemente in Rohrkörper eingeschoben und unter bleibender Verformung aufgeweitet werden.

Eine gattungsbestimmende gebaute Welle ist aus der EP-A-0 328 009 bekannt (Stand der Technik gemäß Artikel 54(3) und (4) EPÜ). Bei dieser werden auf einer durchgehenden Hohlwelle einzelne darauf aufgeschobene Antriebselemente kraftschlüssig festgelegt. Zur Erhöhung der Torsionssteifigkeit ist jeweils zwischen zwei Antriebselementen ein Rohrkörper eingesetzt, der gegenüber der Hohlwelle einen abgestuften größeren Durchmesser aufweist und dessen im Durchmesser reduzierten Bundbereiche auf der Hohlwelle geführt und in die Antriebselemente hineinreichen. Innerhalb eines Antriebselementes sind die hineinreichenden Rohrkörper aneinandergesetzt. Um die Wanddicke der durchgehenden Hohlwelle extrem dünn machen bzw. dafür weichere Werkstoffe verwenden zu können, wird außerdem vorgeschlagen Stützhülsen im Bereich der Antriebselemente in der Hohlwelle anzuordnen, wobei die axiale Länge dieser Stützhülsen nur geringfügig größer sein soll als die der Antriebselemente. Die Stützhülsen, die Abschnitte der Hohlwelle innerhalb der Antriebselemente sowie die in die Antriebselemente eingesteckten Bundbereiche der Rohrkörper werden zusammen mit dem jeweiligen Antriebselement in einem einzigen Aufweitevorgang kraftschlüssig miteinander verbunden. Nachteilig bei dieser Konstruktion ist die Verwendung einer durchgehenden Hohlwelle, die das Massengewicht einer gebauten Welle stark erhöht.

Es sind verschiedene Verfahren zur Herstellung der vorstehend genannten gebauten Wellen beschrieben worden, bei denen jeweils mit Dichtungen versehene Druckmittelsonden verwendet werden (DE-A-37 26 083), deren Außendurchmesser im wesentlichen dem Innendurchmesser der Hohlwelle entspricht. Die mit Drücken von mehreren 1000 bar belasteten Dichtungen unterliegen der Druckbeaufschlagung aber auch beim Einführen und Ziehen der Sonde einem erheblichen Verschleiß, so daß die Dichtungen regelmäßig erneuert werden müssen. Bei einem aufgrund der geringen Standzeit nicht selten unvorhergesehenen Versagen von Dichtungen wird die in der Fertigung befindliche Welle zerstört.

Der Erfindung liegt die Aufgabe zugrunde, eine gebaute Welle der genannten Art in nochmals verbesserter Bauweise mit reduzierten Massen bei guter Torsion und Biegefestigkeit zur Verfügung zu stellen.

Weiterhin liegt der Erfindung die Aufgabe zugrunde ein zur Herstellung derartiger gebauter Wellen besonders geeignetes Verfahren der eingangs genannten Art und eine Anordnung zu dessen Durchführung zu schaffen, bei dem auf Sonden mit Mehrfachdichtungen herkömmlicher Art verzichtet werden kann und durch welches die Fehlerquellen bei gleichwohl kostengünstiger Durchführung verringert werden.

Die Lösung liegt in einer gebauten Welle gemäß der Merkmalskombination des Anspruches 1 und in einem Verfahren gemäß der Merkmalskombination des Anspruches 2.

Eine derartige Welle weist aufgrund der gegenüber den Durchgangsöffnungen der Antriebselemente im Durchmesser vergrößerten Rohrkörper, die die tragende Struktur der Welle bilden, eine hohe Torsions- und Biegefestigkeit auf. Die Abstufungen der Rohrkörper können sich an den Flanken der Antriebselemente anlegen und damit abstützen, wodurch die Biegefestigkeit günstig beeinflußt wird. Die kraftschlüssige Verbindung wird bei dünnwandiger Bauweise der Rohrkörper durch die eingeschobenen Hülsen sichergestellt, die auf die erforderlichen Abschnitte innerhalb der Antriebselemente reduziert sind, um die Massen zu verringern.

Die Hülsen können zur Herstellung der kraftschlüssigen Verbindung eingepreßt, eingeschrumpft bzw. die Antriebselemente aufgeschrumpft sein. Weiterhin können die Hülsen mit mechanischen Mitteln oder auf hydraulischem Wege über ihre Elastizitätsgrenze hinaus bleibend aufgeweitet werden. Hierfür kommen als solche bekannte Druckmittelsonden in Betracht.

Ein besonders geeignetes erfindungsgemäßes Verfahren besteht darin, daß in die offenen Enden einer Hülse jeweils durchbohrte Stopfen druckmitteldicht eingeschoben werden und daß jeweils der durch Hülse und eingesetzte Stopfen gebildete Hohlraum über die Stopfenbohrungen mittels Druckmedium bis zur bleibenden radialen Verformung der Hülse druckbeaufschlagt wird.

Nach einer ersten günstigen Ausgestaltung wird jeweils ein zumindest die freie Innenfläche der Hülse und den äußeren Bereich der Stirnfläche der Stopfen bedeckender Überzug vor der Druckbeaufschlagung in den Hohlraum - insbesondere über die Stopfenbohrungen - eingebracht.

Durch das hiermit beschriebene Verfahren wird eine Schicht oder filmartige Masse im Inneren der Hülse aufgebracht, die in den hier zwischen Stopfen und Hülse bestehenden Dichtspalt abdichtend eindringen kann, um eine perfekte Abdichtung zu gewährleisten. Der genannte Überzug stellt hierbei verlorenes, nur einmal zur Verwendung kommendes Material dar, das gegebenenfalls teilweise auch nach dem erfolgten Aufweiten in der Hülse verbleiben kann. Anders als bei mehrfach verwendeten Dichtungsringen auf einem Sondenkörper, bei dem ein Eindringen in den Dichtungsspalt zu Beschädigungen führt, ist das Eindringen des hier verwendeten Überzuges nicht nur für das Verfahren unschädlich, sondern geeignet, die Dichtwirkung zu erhöhen.

Für das Aufbringen des Überzugs stehen verschiedene Möglichkeiten bereit, beispielsweise kann nach dem Ineinanderstecken der Hülsen und Stopfen ein innerer Überzug mittels einer durch eine der Stopfenbohrungenen eingeführte Düse aufgesprüht werden. Nach einer weiteren Möglichkeit können die ineinander gesteckten Hülsen und Stopfen mit einer zähflüssigen Flüssigkeit, die an den Wänden haften bleibt, ausgegossen werden. Hierbei kann die Anordnung bevorzugt um alle Achsen gedreht werden. Eine dritte Möglichkeit zum Aufbringen des Überzugs besteht darin, daß ein durch die Stopfenbohrungen einschiebbares Rohr, daß aus plastisch sehr gut verformbarem Material besteht, durch die Stopfen eingeschoben und mit Innendruck beaufschlagt wird, so daß es sich bis an die Hülsenwandung anlegt.

Als Material für den Überzug kommen geeignete niedrigschmelzende Metalle oder sonstige aushärtbare organische Stoffe in Frage.

Nach einer zweiten günstigen Ausgestaltung können jeweils die Ringspalte zwischen der Hülse und den Stopfen im Hohlraum durch leicht verformbare Dichtungen insbesondere aus Kunststoff oder Weichmetall bestehende Dichtringe abgedichtet werden, die bereits beim Einschieben der Stopfen mit eingesetzt werden und die sich unter dem Innendruck so in die inneren Ringspalte im Hohlraum anlegen und eindrücken, daß die absolute Dichtheit des Systems gegeben ist.

Eine Abwandlung des vorstehenden kann darin bestehen, daß die Stopfen im Preßsitz in die Hülsen eingesetzt sind, wobei ggfs. auf Dichtungen gänzlich verzichtet werden kann. Dies ist insbesondere dann der Fall, wenn der Preßsitz, der beispielsweise auch durch thermisches Schrumpfen erzeugt sein kann, während des ganzen Vorgangs des radialen Verformens der Hülse erhalten bleibt. Hiernach würden die Stopfen im fertiggestellten Rohr verbleiben.

Nach einer weiteren günstigen Ausgestaltung können die Stopfen im Preßsitz in die Hülse eingesetzt sein, dieser jedoch so bemessen sein, daß er sich beim radialen Verformen des Hülse löst, so daß die Stopfen anschließend entfernt werden können. Dieses Verfahren setzt die obengenannten zusätzlichen Mittel zur Abdichtung des Hohlraums voraus.

Eine weitere günstige Ausgestaltung des Verfahrens besteht darin, ein hochviskoses Medium als Druckflüssigkeit zu verwenden, beispielsweise ein Wachs, daß sich selbst abdichtend in die Ringspalte im Hohlraum zwischen Stopfen und Hülse setzt und einen Druckaufbau ohne besondere Dichtungselemente ermöglicht. Eine Druckerhöhung mit Wasser oder einem anderen geringerviskosen Medium kann dann im Bereich der Stopfenbohrungen bzw. bei einer Mehrfachanordnung im Bereich der Stopfenbohrungen der jeweils äußeren Stopfen erfolgen.

Die verwendeten Stopfen, durch deren Bohrungen die Druckflüssigkeiten zugeführt werden, sind vorzugsweise mit einem Druckmittelerzeuger zu verbinden und auch diese Verbindung ist abzudichten; hier ist ein Versagen einer Dichtung jedoch unschädlich. Bei wiederholt zur Verwendung kommenden Stopfen kann die genannte Verbindung der Stopfen zum Druckmittelerzeuger beispielsweise eine absolut sichere herkömmliche Hochdruckverbindung sein.

Wenn nur eine einzelne Hülse nach dem erfindungsgemäßen Verfahren aufgeweitet wird, ist es verständlich, daß bei horizontaler Anordnung der Stopfenbohrungen jeweils die eine Bohrung dem Einbringen von Druckflüssigkeit und die andere Bohrung zur Entlüftung dienen kann. Insbesondere bei vertikaler Anordnung der Stopfen mit ihren Bohrungen kann aber auch einer der Stopfen als bohrungsloser Blindstopfen ausgeführt sein.

Da in der Regel an einer Welle mehrere gleichartige Hülsen verformt werden müssen, ist es besonders vorteilhaft, wenn jeweils ein durchgehender Stopfen mit einer durchgehenden Bohrung in die Enden zweier benachbarter Hülsen eingeschoben wird.

Um das begrenzte Einschieben der Stopfen in die Hülsen zu erleichtern, können an ihnen in günstiger Ausführung Ringstufen oder sonstige Anschläge vorgesehen sein.

Eine besonders günstige Anordnung zur Durchführung des erfindungsgemäßen Verfahrens besteht in vormontierten Einheiten aus zumindest einer Hülse und zwei Stopfen, die mit einem inneren Überzug versehen werden, bevor sie in den oder die Rohrkörper eingeschoben werden, die miteinander zu verbinden sind und/oder auf denen Elemente festgelegt werden sollen. Wenn hierbei die Stopfen mit den zuvor genannten Anschlägen versehen sind, bedarf es vor einer inneren Druckbeaufschlagung nur der Fixierung der jeweils äußeren Stopfen, um die axiale Sicherung der Gesamtanordnung bei der folgenden inneren Druckbeaufschlagung der Hülsen zu garantieren.

Eine vorgefertige Einheit, aus Hülsen und Stopfen wird bevorzugt so ausgelegt, daß die Stopfen bereits im Preßsitz in die Enden der Hülsen eingesetzt sind.

Diese Maßnahme erleichert die Gesamtmontage ebenso wie die erforderliche Abdichtung durch den inneren Überzug. Bei einem Aufweiten der Hülsen löst sich der Preßsitz und ermöglicht das leichte axiale Herausdrücken der Stopfen. Die Gesamtanordnung aus ineinander gestecktem Rohr und mit Stopfen montierten Hülsen wird bevorzugt in einer Art Gesenk eingelegt, durch das die Winkellage der Elemente bzw. Rohrstücke fixiert und zugleich der axiale Reaktionsdruck der axial einseitig freiliegenden Stopfen aufgefangen wird.

Nach einer besonders einfachen Verfahrensweise kann der Druck innerhalb der Vorrichtung selber erzeugt werden, indem die jeweils außenliegenden Stopfen abgedichtet und axial verschoben werden oder indem in die Durchgangsbohrungen der jeweils axial außenliegenden Stopfen kleine Kolben eingepreßt werden, wobei jeweils vorauszusetzen ist, daß der Innenraum der Hülsen und der Durchgangsbohrung vorher mit Druckflüssigkeit, bevorzugt Wasser, aufgefüllt worden ist.

Bevorzugte Ausführungsbeispiele erfindungsgemäßer Anordnungen, an denen das erfindungsgemäße Verfahren verdeutlicht werden kann, sind in den Zeichnungen widergegeben.
- Fig. 1: zeigt eine Anordnung zur Herstellung einer gebauten Kurbelwelle,
- Fig. 2: zeigt eine Anordnung zur Herstellung einer gebauten Nockenwelle in einer ersten Ausführung,
- Fig. 3: zeigt eine Anordnung zur Herstellung einer gebauten Nockenwelle in einer zweiten Ausführung,
- Fig. 4: zeigt eine Anordnung zur Herstellung einer gebauten Nockenwelle in einer dritten Ausführung,
- Fig. 5: zeigt eine bekannte Druckmittelsonde zur Herstellung einer erfindungsgemäßen Nockenwelle,
- Fig. 6: zeigt eine erfindungsgemäße Nockenwelle.

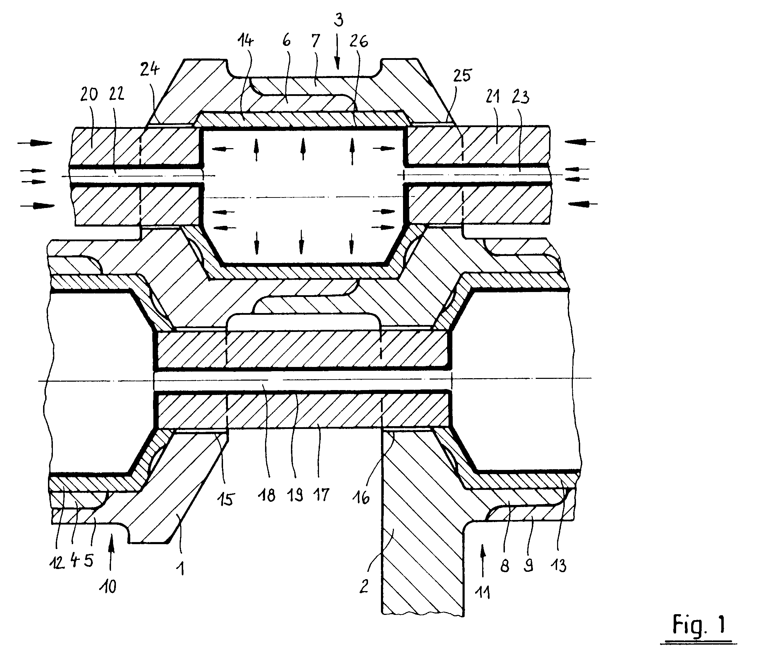

In Figur 1 ist ein Abschnitt einer Kurbelwelle erkennbar, der zwei Kurbelwangen 1, 2 umfaßt, von denen letztere ein Gegengewicht aufweist. An die Kurbelwangen 1, 2 sind jeweils als Rohrstücke ausgebildete Zapfenansätze 5, 6, 7, 8 angesetzt, die mit entsprechenden Ansätzen 4, 9 benachbarter Wangen zur Bildung eines Grundzapfens 10, 11 oder Hubzapfens 3 passend ineinander gesteckt sind. In die Ineinandergesteckten Zapfenteile 4,5; 8,9 der Grundzapfen 10, 11 sind erste symmetrische Hülsen 12, 13 eingesteckt, in die ineinandergesteckten Zapfenteile 6, 7 des Hubzapfens 3 ist eine weitere unsymmetrische Hülse 14 eingesetzt. In die einander zugewandten Hülsen 12, 13 und durch Bohrungen 15, 16 in den Kurbelwangen 1, 2 hindurch ist ein Stopfen 17 mit einer kleinen Durchgangsbohrung 18 eingesetzt. Die gesamte innere Oberfläche der Hülsen 12, 13 sowie die freien Flächen des Stopfens 17 einschließlich der inneren Bohrung 18 sind mit einem Überzug 19 versehen, der insbesondere den Ringspalt zwischen Stopfen und Hülsen mit abdichtet.

In die beiden Öffnungen der Hülse 14 sind zwei Stopfen 20, 21 passend eingeschoben, die Öffnungen 22, 23 der Kurbelwangen durchsetzen. Auch hier ist ein Überzug 24 erkennbar, der die Innenfläche der Hülse 14 und die Stirnflächen der Stopfen 20, 21 einschließlich deren jeweiliger Innenbohrung 25, 26, auskleidet.

Wie am Stopfen 17 erkennbar, sind diejenigen Stopfen, die in benachbarte Hülsen hineinragen, auch bei Druckbeaufschlagung im Kräftegleichgewicht und bedürfen keiner besonderen Sicherung. Dies ist nur bei den nicht dargestellten Stopfen in Endlage erforderlich. Nach Fertigstellung der Welle können die Stopfen leicht herausgedrückt werden, weil sich die Hülsen 12, 13, 14, 36, 37 im Durchmesser bleibend erweitert haben.

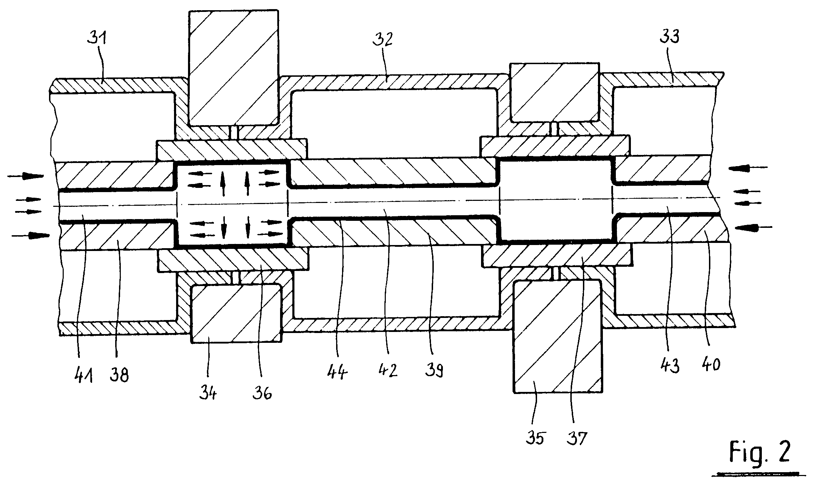

In Fig. 2 ist ein Abschnitt einer Nockenwelle gezeigt, die aus einzelnen, jeweils abgestuften Rohrstücken 31, 32, 33 besteht, auf deren Enden jeweils Nocken 34, 35 als festzulegende Elemente aufgeschoben sind, wobei in die entsprechenden Rohrbereiche rein zylindrische Hülsen 36, 37, eingesteckt sind. Jeweils in die Enden dieser Hülsen 36, 37 sind Stopfen 38, 39, 40 mit Durchgangsbohrungen 41, 42, 43 eingesteckt, wobei der mitteler Stopfen erkennbar mit seinen Enden in die beiden benachbarten Hülsen 36, 37 hineinragt. Der freiliegende Innenbereich der Hülsen 36, 37 sowie die Stirnflächen der Stopfen 38, 39, 40 und deren Innenbohrungen 41, 42, 43 sind mit einem Überzug 44 ausgekleidet. Die Einheit aus Hülsen und Stopfen einschließlich des Überzugs kann vormontiert in die Rohrabschnitte 31, 32, 33 mit den darauf festgelegten Antriebselementen 34, 35 eingeschoben worden sein und nach dem inneren Druckbeaufschlagen und elastischem Aufweiten der Hülsen 36, 37 dort verbleiben oder aus der fertig gebauten Welle entfernt werden.

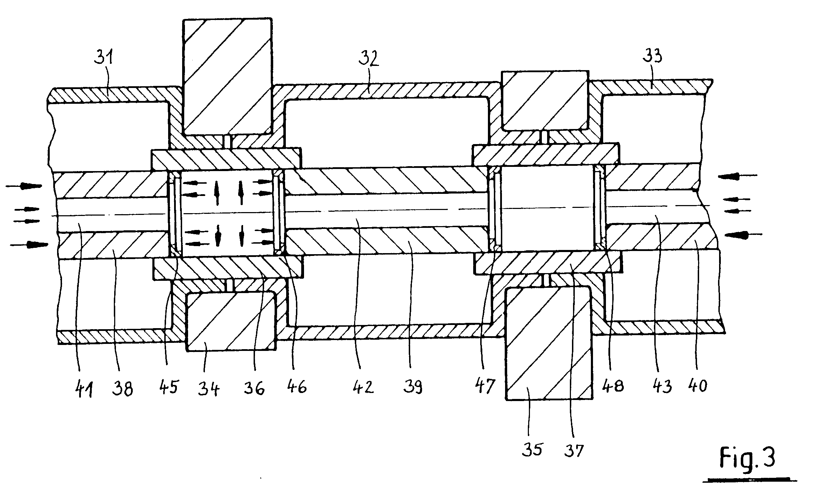

In Fig. 3 ist im wesentlichen die gleiche Anordnung wie in Fig. 2 gezeigt, wobei die gleichen Bezugszeichen verwendet sind. Anstelle des Überzugs sind hier leicht verformbare Dichtringe 45, 46, 47, 48 jeweils vor dem Stopfen eingesetzt.

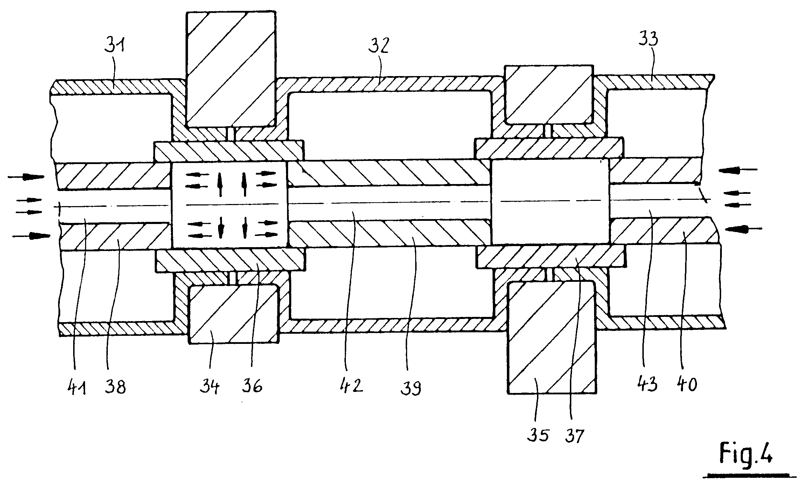

In Fig. 4 ist im wesentlichen die gleiche Anordnung wie in Fig. 3 gezeigt, jedoch ohne Verwendung von Dichtringen, wobei ein sich auch bei radialer Aufweitung der Hülsen 36, 37 nicht lösender Preßsitz erforderlich ist oder die Verwendung einer die Spalte zwischen Stopfen 38, 39, 40 und Hülsen 36, 37 zusetzenden hochviskosen Flüssigkeit vorzusehen ist.

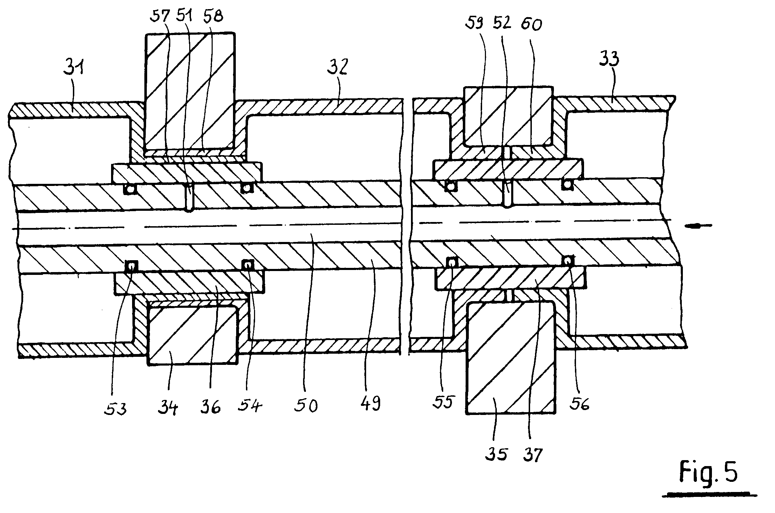

In Fig. 5 ist eine in die aus Nocken 34, 35 und Rohrstücken 31, 32, 33 sowie Hülsen 36, 37 zusammengesetzte Nockenwelle eingeschobene Druckmittelsonde 49 dargestellt, die eine Innenbohrung 50, radiale Bohrungen 51, 52 und paarweise symmetrisch zu letzteren angeordnete Dichtungen 53, 54; 55, 56 aufweist. Bei Druckbeaufschlagung werden die Hülsen 36, 37 radial über die Elastizitätsgrenze hinaus verformt und stellen eine kraftschlüssige Einspannung der Rohrstücke 31, 32, 33 im Bereich der Nocken her.

In der linken Bildhälfte sind die Endstücke 57, 58 der Rohrstücke 31, 32 ineinandergesteckt, während in der rechten Bildhälfte die Endstücke 59, 60 der Rohrstücke 32, 33 durchmessergleich sind und bei halber Länge des Nockens 35 aneinanderstoßen.

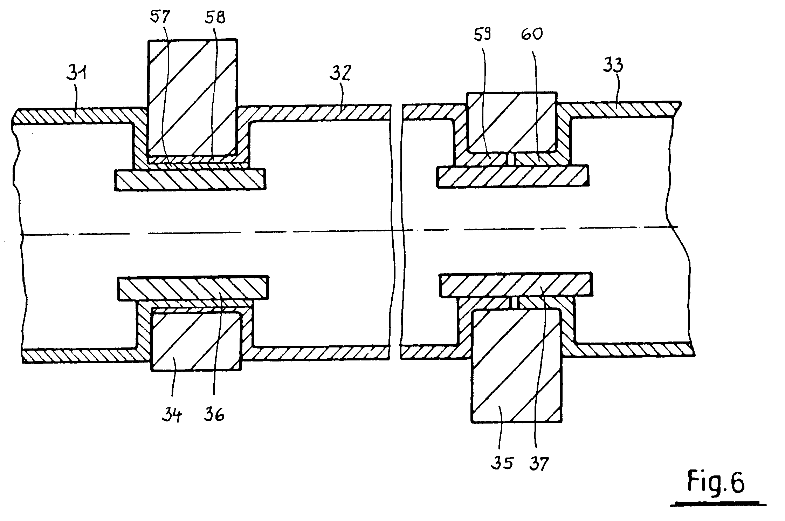

Fig. 6 zeigt bei gleicher Bezifferung wie Fig. 5 eine fertige erfindungsgemäße Nockenwelle, die nach einem der zuvor beschriebenen Verfahren oder auf anderem Wege, wie Schrumpfen oder Verpressen hergestellt sein kann oder stoffschlüssige Verbindungen, die durch Schweißen oder Löten erzeugt sind, aufweisen kann.

## Patentansprüche

1. Gebaute Welle bestehend aus einer aus einzelnen Rohrkörpern (6,7,31,32,33) zusammengesetzten Hohlwelle und darauf befestigten Antriebselementen wie Nocken (34,35) oder Zahnrädern und/oder darauf befestigten Lagerhülsen, wobei die Endbereiche der einzelnen Rohrkörper (6,7,31,32,33) in die Antriebselemente (34,35) oder Lagerhülsen eingesetzt sind und außerhalb derselben einen gegenüber dem Innendurchmesser der Antriebselemente (34,35) oder Lagerhülsen abgestuften vergrößerten Außendurchmesser haben, wobei die Endbereiche der Rohrkörper (6,7,31,32,33) jeweils innerhalb eines Antriebselementes (34,35) oder einer Lagerhülse nahe beieinander liegen und Hülsen (12,13,14,36,37) innerhalb der Antriebselemente (34,35) oder Lagerhülsen eingesetzt sind und die Rohrkörper (6,7,31,32,33) mit den Antriebselementen (34,35) oder Lagerhülsen kraftschlüssig verbunden sind, wobei die Endbereiche der Rohrkörper (6,7,31,32,33) aneinandergesetzt (31,32,33) oder ineinandergesteckt (6,7) sind und die Hülsen (12,13,14,36,37) innerhalb der Antriebselemente (34,35) oder Lagerflülsen in die aneinandergesetzten (31,32,33) oder ineinandergesteckten (6,7) Rohrkörper (6,7,31,32,33) eingesetzt sind und die Rohrkörper (6,7,31,32,33) mit den Antriebselementen (34,35) oder Lagerhülsen und den Hülsen (12,13,14,36,37) kraftschlüssig verbunden sind, wobei zwischen den Rohrkörpern (6,7,31,32,33) und Hülsen (12,13,14,36,37) keine Hohlwelle eingesetzt ist.

2. Verfahren zum Herstellen einer gebauten Welle, insbesondere einer Kurbelwelle, Getriebe- oder Nockenwelle bei der Hülsenelemente (12,13,14,36,37) in Rohrkörper (6,7,31,32,33) eingeschoben und unter bleibender Verformung aufgeweitet werden, wobei Antriebselemente (34,35) und/oder Lagerhülsen auf die Rohrkörper (6,7,31,32,33) aufgeschoben sind und das Aufweiten der Hülsen (12,13,14,36,37) zum kraftschlüssigen Verbinden der Hülsenelemente (12,13,14,36,37) mit den nahe beieinanderliegenden Rohrkörpern (6,7,31,32,33) miteinander oder der aufgeschobenen Antriebselemente (34,35) oder Lagerhülsen mit den Rohrkörpern (6,7,31,32,33) erfolgt, wobei in die offenen Enden einer Hülse (12, 13, 14, 36, 37) jeweils durchbohrte Stopfen (17, 20, 21, 38, 39, 40) druckmitteldicht eingeschoben werden und daß jeweils der durch Hülse (12, 13, 14, 36, 37) und eingesetzte Stopfen (17, 20, 21, 38, 39, 40) gebildete Hohlraum mittels Druckmedium bis zur bleibenden radialen Verformung der Hülse (12, 13, 14, 36, 37) druckbeaufschlagt wird.

3. Verfahren nach Anspruch 2,
dadurch gekennzeichnet,
daß jeweils ein zumindest die freie Innenfläche der Hülse (12, 13, 14, 36, 37) und den äußeren Bereich der Stirnfläche der Stopfen (17, 20, 21, 38, 39, 40) bedeckender Überzug (19, 26, 44) vor der Druckbeaufschlagung in den Hohlraum - insbesondere über die Stopfenbohrungen (18, 22, 23, 41, 42, 43) - eingebracht wird.

4. Verfahren nach Anspruch 2,
dadurch gekennzeichnet,
daß jeweils die Ringspalte zwischen der Hülse (12, 13, 14, 36, 37) und den Stopfen (17, 20, 21, 38, 39, 40) im Hohlraum durch leicht verformbare Dichtringe, insbesondere aus Kunststoff oder Weichmetall abgedichtet werden.

5. Verfahren nach einem der Ansprüche 2 bis 4,
dadurch gekennzeichnet,
daß die Stopfen (17, 20, 21, 38, 39, 40) im Preßsitz, der bei der radialen Verformung der Hülse (12, 13, 14, 36, 37) während der Druckbeaufschlagung erhalten bleibt, in die Hülse (12, 13, 14, 36, 37) eingesetzt sind.

6. Verfahren nach einem der Ansprüche 2 bis 3,
dadurch gekennzeichnet,
daß die Stopfen (17, 20, 21, 38, 39, 40) im Preßsitz, der sich am Ende der radialen Verformung der Hülse (12, 13, 14, 36, 37) löst, in die Hülse (12, 13, 14, 36, 37) eingesetzt sind.

7. Verfahren nach einem der Ansprüche 2 bis 5,
dadurch gekennzeichnet,
daß ein die Ringspalte zwischen Hülse (12, 13, 14, 36, 37) und den Stopfen (17, 20, 21, 38, 39, 40) im Hohlraum zusetzendes hochviskoses Medium zum Beispiel Wachs, zur Druckbeaufschlagung verwendet wird.

8. Verfahren nach einem der Ansprüche 2 bis 7,
dadurch gekennzeichnet,
daß bei mehreren achsgleich angeordneten Hülsen (12, 13; 36, 37) jeweils ein Stopfen (17; 39) in die offenen Enden zweier benachbarter Hülsen (12, 13, 36, 37) eingeschoben sind.

9. Verfahren nach einem der Ansprüche 2 bis 8,
dadurch gekennzeichnet,
daß eine aus zumindest einer Hülse (14; 12, 13; 36, 37) und darin eingesteckten Stopfen (20, 21; 17; 38, 39, 40) bestehende Anordnung vor dem Einbringen in die Rohrkörper (6, 7; 4, 5; 8, 9; 31, 32, 33) vormontiert wird.

10. Verfahren nach einem der Ansprüche 2 oder 3,
dadurch gekennzeichnet,
daß der Überzug (19, 26, 44) durch Einbringen einer flüssigen aushärtbaren Masse in die ineinandergesteckten Hülsen (12, 13, 14, 36, 37) und Stopfen (17, 20, 21, 38, 39, 40) gegebenenfalls unter Drehen bzw. Schwenken der aus ihnen gebildeten Anordnung, aufgebracht wird.

11. Verfahren nach einem der Ansprüche 2 oder 3,
dadurch gekennzeichnet,
daß der Überzug (19, 26, 44) durch Einstecken und Aufweiten eines aus einem plastisch leicht verformbaren Material bestehenden Röhrchens in die Anordnung aus ineinandergesteckten Hülsen (12, 13, 14, 36, 37) und Stopfen (17, 20, 21, 38, 39, 40) hergestellt wird.

12. Verfahren nach einem der Ansprüche 2 oder 3,
dadurch gekennzeichnet,
daß der Überzug (19, 26, 44) mittels einer Düse, die durch eine der Stopfenbohrungen (18, 22, 23, 41, 42, 43) in das Innere der ineinandergesteckten Hülsen (12, 13, 14, 36, 37) und Stopfen (20, 21, 17, 38, 39, 40) eingeführt wird, aufgesprüht wird.

13. Verfahren nach einem der Ansprüche 2 bis 12,
dadurch gekennzeichnet,
daß zum Aufweiten der Hülsen (12, 13, 14, 36, 37) deren Innenraum und die Bohrungen der Stopfen (20, 21, 17, 38, 39, 40), insbesondere in senkrechter Anordnung, unter geringer Druckaufgabe mit Druckflüssigkeit gefüllt und anschließend der Druck erhöht wird.

14. Verfahren nach Anspruch 13,
dadurch gekennzeichnet,
daß der Druck mittels eines an eine der Stopfenbohrungen (18, 22, 23, 41, 42, 43) dichtend angeschlossenen Druckerzeugers erhöht wird.

15. Verfahren nach Anspruch 13,
dadurch gekennzeichnet,
daß der Druck bei verschlossenen Stopfenbohrungen in den jeweils äußeren Stopfen durch Verschieben derselben erzeugt wird.

16. Verfahren nach Anspruch 13,
dadurch gekennzeichnet,
daß der Druck durch Einführen von Kolben in die Bohrungen der jeweils äußeren Stopfen erzeugt wird.

## Claims

1. A built-up shaft consisting of a hollow shaft assembled from individual tubular members (6, 7, 31, 32, 33) and, mounted thereon, drive elements such as cams (34, 35) or gear wheels and/or bearing sleeves, the end portions of the individual tubular members (6, 7, 31, 32, 33) being inserted into the drive elements (34, 35) or bearing sleeves and having outside thereof an outside diameter which is stepped and enlarged in respect of the inside diameter of the drive elements (34, 35) or bearing sleeves, the end portions of the tubular members (6, 7, 31, 32, 33) being situated close to one another respectively within a drive element (34, 35) or a bearing sleeve, sleeves (12, 13, 14, 36, 37) being inserted within the drive elements (34, 35) or bearing sleeves and the tubular members (6, 7, 31, 32, 33) being connected to the drive elements (34, 35) or bearing sleeves in a force-locking manner, wherein the end portions of the tubular members (6, 7, 31, 32, 33) are adjacently disposed (31, 32, 33) or are inserted into one another (6, 7) and the sleeves (12, 13, 14, 36, 37) are, within the drive elements (34, 35) or bearing sleeves, inserted into the adjacently disposed (31, 32, 33) or inter-fitted (6, 7) tubular members (6, 7, 31, 32, 33) and the tubular members (6, 7, 31, 32, 33) are force-lockingly connected to the drive elements (34, 35) or bearing sleeves and the sleeves (12, 13, 14, 36, 37), no hollow shaft being inserted between the tubular members (6, 7, 31, 32, 33) and sleeves (12, 13, 14, 36, 37).

2. A method of producing a built-up shaft, particularly a crankshaft, gearshaft or camshaft, in which sleeve elements (12, 13, 14, 36, 37) are pushed into tubular members (6, 7, 31, 32, 33) and are widened out under lasting deformation, drive elements (34, 35) and/or bearing sleeves being pushed onto the tubular members (6, 7, 31, 32, 33), the widening out of the sleeves (12, 13, 14, 36, 37) for force-locking connection of the sleeve elements (12, 13, 14, 36, 37) to the closely adjacently disposed tubular members (6, 7, 31, 32, 33), to one another or of the pushed-on drive elements (34, 35) or bearing sleeves to the tubular members (6, 7, 31, 32, 33), wherein drilled-through plugs (17, 20, 21, 38, 39, 40) are pushed into the open ends of a sleeve (12, 13, 14, 36, 37) in such a way that they are sealed against pressurised medium and in that in each case the cavity formed by sleeve (12, 13, 14, 36, 37) and inserted plug (17, 20, 21, 38, 39, 40) is pressurised by a pressure medium to the point of lasting radial deformation of the sleeve (12, 13, 14, 36, 37).

3. A method according to claim 2, characterised in that in each case a covering (19, 26, 44) which masks at least the free inner surface of the sleeve (12, 13, 14, 36, 37) and the outer portion of the end face of the plugs (17, 20, 38, 39, 40) is fitted into the cavity - particularly through the bores (18, 22, 23, 41, 42, 43) in the plugs - prior to the pressure being applied.

4. A method according to claim 2, characterised in that in each case the annular gaps between the sleeve (12, 13, 14, 36, 37) and the plugs (17, 20, 21, 38, 39, 40) in the cavity are sealed by easily deformable sealing rings, particularly rings consisting of synthetic plastics or soft metal.

5. A method according to one of claims 2 to 4, characterised in that the plugs (17, 20, 21, 38, 39, 40) are inserted into the sleeve (12, 13, 14, 36, 37) with a press fit which is retained during radial deformation of the sleeve (12, 13, 14, 36, 37) while the pressure is applied.

6. A method according to one of claims 2 to 3, characterised in that the plugs (17, 20, 38, 39, 40) are inserted into the sleeve (12, 13, 14, 36, 37) with a press fit which is released at the end of the radial deformation of the sleeve (12, 13, 14, 36, 37).

7. A method according to one of claims 2 to 5, characterised in that a highly viscous medium, for instance wax, is used as the pressurising medium to occlude the annular gaps between sleeve (12, 13, 14, 36, 37) and the plugs (17, 20, 21, 38, 39, 40) in the cavity.

8. A method according to one of claims 2 to 7, characterised in that where there are a plurality of sleeves (12, 13; 36, 37) disposed on the same axis, in each case one plug (17; 39) is pushed into the open ends of two adjacent sleeves (12, 13; 36, 37).

9. A method according to one of claims 2 to 8, characterised in that an arrangement consisting of at least one sleeve (14; 12, 13; 36, 37) and a plug (20, 21; 17; 38, 39, 40) inserted therein is preassembled prior to being fitted into the tubular members (6, 7; 4, 5; 8, 9; 31, 32, 33).

10. A method according to one of claims 2 or 3, characterised in that the covering (19, 26, 44) is applied by introducing a liquid hardenable composition into the inter-engaged sleeves (12, 13, 14, 36, 37) and plugs (17, 20, 21, 38, 39, 40) possibly accompanied by rotation or pivoting the arrangement formed by them.

11. A method according to one of claims 2 or 3, characterised in that the covering (19, 26, 44) is produced by inserting and widening out a small tube consisting of a plastically easily deformable material into the arrangement consisting of inter-engaged sleeves (12, 13, 14, 36, 37) and plugs (17, 20, 21, 38, 39, 40).

12. A method according to one of claims 2 or 3, characterised in that the covering (19, 26, 44) is sprayed on by a jet which is inserted through one of the plug bores (18, 22, 23, 41, 42, 43) into the interior of the inter-engaged sleeves (12, 13, 14, 36, 37) and plugs (20, 21, 17, 38, 39, 40).

13. A method according to one of claims 2 to 12, characterised in that for widening out of the sleeves (12, 13, 14, 36, 37), their interior and the bores in the plugs (20, 21, 17, 38, 39, 40) are, particularly in a vertical arrangement, filled with pressurised fluid with a negligible application of pressure after which the pressure is increased.

14. A method according to claim 13, characterised in that the pressure is increased by means of a pressure generator connected to one of the plug bores (18, 22, 23, 41, 42, 43) in a sealing-tight manner.

15. A method according to claim 13, characterised in that when the plug bores are occluded, the pressure is generated in whichever are the outer plugs by a displacement of the said plugs.

16. A method according to claim 13, characterised in that the pressure is generated by the introduction of pistons into the bores in whichever are the outer plugs.

## Revendications

1. Arbre en plusieurs pièces, constitué d'un arbre creux composé de corps tubulaires individuels (6, 7, 31, 32, 33), et d'éléments d'entraînement fixés sur cet arbre, tels que des cames (34, 35) ou des roues dentées, et/ou de douilles de palier fixées sur cet arbre, les régions terminales des différents corps tubulaires (6, 7, 31, 32, 33) étant insérées dans les éléments d'entraînement (34, 35) ou douilles de palier et présentant, en dehors de ces éléments, un diamètre extérieur agrandi en gradin par rapport au diamètre intérieur des éléments d'entraînement (34, 35) ou douilles de palier, les régions terminales des corps tubulaires (6, 7, 31, 32, 33) étant chaque fois juxtaposées à proximité entre elles à l'intérieur d'un élément d'entraînement (34, 35) ou d'une douille de palier, et des bagues (12, 13, 14, 36, 37) étant insérées à l'intérieur des éléments d'entraînement (34, 35) ou douilles de palier, et les corps tubulaires (6, 7, 31, 32, 33) étant assemblés par adhérence aux éléments d'entraînement (34, 35) ou douilles de palier,
**dans lequel** les régions terminales des corps tubulaires (6, 7, 31, 32, 33) sont placées en aboutement (31, 32, 33) ou mutuellement emboîtées (6, 7), et les bagues (12, 13, 14, 36, 37) à l'intérieur des éléments d'entraînement (34, 35) ou douilles de palier sont insérées dans les corps tubulaires (6, 7, 31, 32, 33) jointifs (31, 32, 33) ou mutuellement emboîtés (6, 7), et les corps tubulaires (6, 7, 31, 32, 33) sont assemblés par adhérence aux éléments d'entraînement (34, 35) ou douilles de palier et aux bagues (12, 13, 14, 36, 37), et il n'y pas d'arbre creux inséré entre les corps tubulaires (6, 7, 31, 32, 33) et les bagues (12, 13, 14, 36, 37).

2. Procédé de fabrication d'un arbre en plusieurs parties, notamment d'un vilebrequin, arbre de transmission ou arbre à cames, des bagues (12, 13, 14, 36, 37) étant enfilées dans des corps tubulaires (6, 7, 31, 32, 33) et élargies sous déformation permanente, des éléments d'entraînement (34, 35) et/ou douilles de palier étant enfilés sur les corps tubulaires (6, 7, 31, 32, 33), et l'élargissement des bagues (12, 13, 14, 36, 37) étant effectué pour réaliser l'assemblage par adhérence des bagues (12, 13, 14, 36, 37) avec les corps tubulaires (6, 7, 31, 32, 33) juxtaposés à proximité entre eux, et des éléments d'entraînement (34, 35) ou douilles de palier avec les corps tubulaires (6, 7, 31, 32, 33) sur lesquels ces éléments sont enfilés,
**selon lequel** des bouchons (17, 20, 21, 38, 39, 40), percés de part en part, sont chaque fois enfilés en étanchéité aux fluides sous pression dans les extrémités ouvertes d'une bague (12, 13, 14, 36, 37), et la cavité chaque fois formée par des bagues (12, 13, 14, 36, 37) et des bouchons insérés (17, 20, 21, 38, 39, 40) est alimentée en fluide sous pression jusqu'à obtention d'une déformation radiale permanente des bagues (12, 13, 14, 36, 37).

3. Procédé selon la revendication 2, **caractérisé** en ce qu'un revêtement (19, 26, 44), couvrant au moins la face intérieure libre des bagues (12, 13, 14, 36, 37) et la région extérieure de la face frontale des bouchons (17, 20, 21, 38, 39, 40), est chaque fois introduit avant la sollicitation en pression dans la cavité, notamment par les perçages (18, 22, 23, 41, 42, 43) des bouchons.

4. Procédé selon la revendication 2, **caractérisé** en ce que les fentes annulaires entre les bagues (12, 13, 14, 36, 37) et les bouchons (17, 20, 21, 38, 39, 40) dans la cavité sont chaque fois étanchées par des joints d'étanchéité annulaires aisément déformables, notamment en matière plastique ou en métal doux.

5. Procédé selon l'une quelconque des revendications 2 à 4, **caractérisé** en ce que les bouchons (17, 20, 21, 38, 39, 40) sont insérés dans les bagues (12, 13, 14, 36, 37) par un ajustement serré qui est conservé lors de la déformation radiale des bagues (12, 13, 14, 36, 37) pendant la sollicitation en pression.

6. Procédé selon la revendication 2 ou 3, **caractérisé** en ce que les bouchons (17, 20, 21, 38, 39, 40) sont insérés dans les bagues (12, 13, 14, 36, 37) par un ajustement serré qui se défait à la fin de la déformation radiale des bagues (12, 13, 14, 36, 37).

7. Procédé selon l'une quelconque des revendications 2 à 5, **caractérisé** en ce qu'on utilise pour la sollicitation en pression un fluide très visqueux, par exemple de la cire, qui comble les fentes annulaires entre les bagues (12, 13, 14, 36, 37) et les bouchons (17, 20, 21, 38, 39, 40) dans la cavité.

8. Procédé selon l'une quelconque des revendications 2 à 7, **caractérisé** en ce qu'en présence de plusieurs bagues (12, 13 ; 36, 37) coaxialement disposées, un bouchon respectif (17 ; 39) est enfilé dans les extrémités ouvertes de deux bagues voisines (12, 13, 36, 37).

9. Procédé selon l'une quelconque des revendications 2 à 8, **caractérisé** en ce qu'un ensemble, constitué d'au moins une bague (14 ; 12, 13 ; 36, 37) et de bouchons (20, 21 ; 17 ; 38, 39, 40) emmanchés dans cette bague, est pré-assemblé avant son introduction dans les corps tubulaires (6, 7 ; 4, 5 ; 8, 9 ; 31, 32, 33).

10. Procédé selon la revendication 2 ou 3, **caractérisé** en ce que le revêtement (19, 26, 44) est appliqué en introduisant une masse liquide durcissable dans les bagues (12, 13, 14, 36, 37) et bouchons (17, 20, 21, 38, 39, 40) mutuellement emboîtês, éventuellement sous rotation ou pivotement de l'ensemble formé par ces bagues et bouchons.

11. Procédé selon la revendication 2 ou 3, **caractérisé** en ce que le revêtement (19, 26, 44) est réalisé en emmanchant et élargissant, dans l'ensemble constitué de bagues (12, 13, 14, 36, 37) et de bouchons (17, 20, 21, 38, 39, 40) mutuellement emboîtés, un petit tube constitué d'une matière pouvant être facilement déformée plastiquement.

12. Procédé selon la revendication 2 ou 3, **caractérisé** en ce que le revêtement (19, 26, 44) est pulvérisé au moyen d'une buse, qui est introduite par un des perçages (18, 22, 23, 41, 42, 43) des bouchons à l'intérieur des bagues (12, 13, 14, 36, 37) et bouchons (20, 21, 17, 38, 39, 40) mutuellement emboîtés.

13. Procédé selon l'une quelconque des revendications 2 à 12, **caractérisé** en ce que, pour élargir les bagues (12, 13, 14, 36, 37), leur intérieur et les perçages des bouchons (20, 21, 17, 38, 39, 40), notamment en disposition verticale, sont remplis de liquide sous une faible pression, à la suite de quoi l'on augmente la pression.

14. Procédé selon la revendication 13, **caractérisé** en ce que la pression est augmentée au moyen d'un générateur de pression hermétiquement raccordé aux perçages (18, 22, 23, 41, 42, 43) des bouchons.

15. Procédé selon la revendication 13, **caractérisé** en ce que, les perçages des bouchons étant obturés, la pression est produite dans les bouchons chaque fois extérieurs en déplaçant ces derniers.

16. Procédé selon la revendication 13, **caractérisé** en ce que la pression est produite en introduisant des pistons dans les perçages des bouchons chaque fois extérieurs.
